# EUROPEAN PATENT APPLICATION

(11) **EP 4 590 037 A1**
(43) Date of publication of application: **23.07.2025**
(21) Application number: 23870656.8
(22) Date of filing: 22.09.2023
(51) Int. Cl.: H04W 56/00

(54) **COMMUNICATION METHOD AND APPARATUS**

(30) Priority: 30.09.2022 CN 202211214627
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Körber, Martin Hans
(86) International application number: PCT/CN2023/120875
(87) International publication number: WO 2024/067425

(57) **Abstract**

A communication method and apparatus are provided, and relate to the field of communication technologies, to meet a time provision requirement of a terminal device in a process in which a network device provides time for the terminal device, thereby improving reliability of clock synchronization performed by the terminal device. The method may include: A network device receives first information from a first network element, where the first network element is a mobility management network element or a time sensitive communication and time synchronization function network element, the first information includes first indication information, a first error budget, and a time provision requirement of a terminal device, the first indication information is for activating a time provision capability of the network device, and the first error budget indicates a time provision error range between the network device and the terminal device; and the network device sends time provision information to the terminal device based on the first error budget and the time provision requirement of the terminal device.

## Description

This application claims priority to Chinese Patent Application No. 202211214627.8, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a fifth-generation (fifth-generation, 5G) mobile communication network, a time provision exposure capability may be activated and deactivated by an application function (application function, AF) network element.

The AF network element may send a time provision request to a time sensitive communication and time synchronization function (time sensitive communication and time synchronization function, TSCTSF) network element through a network exposure function (network exposure function, NEF) network element. The time provision request may include identification information of a time provision object (for example, a terminal device), and optionally, may further include an error budget indicating an upper limit of a time provision error.

If the time provision request includes the error budget, the TSCTSF network element may use the error budget as a total error requirement. If the time provision request does not include the error budget, the TSCTSF network element may use a preconfigured default value as the error budget. The TSCTSF network element may use a difference between the error budget and an error of a core network as a maximum time provision error between a network device and a terminal device, and after determining the network device that provides time for the terminal device, send the maximum time provision error to the network device, so that the network device provides time for the terminal device by using a time provision method that meets the maximum time provision error.

In the foregoing time provision process, because the network device provides time for the terminal device based on the maximum time provision error, a clock synchronization requirement of the terminal device may fail to be met, affecting clock synchronization of the terminal device.

### SUMMARY

Embodiments of this application provide a communication method and apparatus, to meet a time provision requirement of a terminal device in a process in which a network device provides time for the terminal device, to improve reliability of clock synchronization performed by the terminal device.

According to a first aspect, an embodiment of this application provides a communication method. The method may include: A network device receives first information from a first network element, where the first network element is a mobility management network element or a time sensitive communication and time synchronization function network element, the first information includes first indication information, a first error budget, and a time provision requirement of a terminal device, the first indication information is for activating a time provision capability of the network device, and the first error budget indicates a time provision error range between the network device and the terminal device; and the network device sends time provision information to the terminal device based on the first error budget and the time provision requirement of the terminal device.

Based on the first aspect, in a process in which the network device provides time for the terminal device, the network device may not only receive, from the first network element, the first indication information and the first error budget that are for activating the time provision capability of the network device, but also receive the time provision requirement of the terminal device from the first network element. The time provision is performed for the terminal device based on the time provision requirement of the terminal device, to meet the time provision requirement of the terminal device, thereby improving reliability of clock synchronization performed by the terminal device.

In a possible design, the time provision requirement of the terminal device includes one or more of the following: a periodic time provision requirement and a time provision service coverage area requirement.

In a possible design, when the time provision requirement of the terminal device includes the periodic time provision requirement, that the network device sends time provision information to the terminal device includes: The network device periodically broadcasts second information, where the second information includes the time provision information; and the network device periodically sends third information to the terminal device if a periodicity associated with the periodic time provision requirement is less than a broadcast periodicity associated with the second information, where the third information includes the time provision information, and a sending periodicity of the third information is less than the broadcast periodicity; or the network device periodically sends fourth information to the terminal device if a periodicity associated with the periodic time provision requirement is greater than a broadcast periodicity associated with the second information, where the fourth information includes the time provision information, and a sending periodicity of the fourth information is greater than the broadcast periodicity.

In a possible design, when the time provision requirement of the terminal device includes the periodic time provision requirement, that the network device sends time provision information to the terminal device includes: The network device periodically broadcasts second information, where the second information includes the time provision information; and the network device periodically broadcasts third information if a periodicity associated with the periodic time provision requirement is less than a broadcast periodicity associated with the second information, where the third information includes the time provision information, and a sending periodicity of the third information is less than the broadcast periodicity associated with the second information; or the network device periodically broadcasts fourth information if a periodicity associated with the periodic time provision requirement is greater than a broadcast periodicity associated with the second information, where the fourth information includes the time provision information, and a sending periodicity of the fourth information is greater than the broadcast periodicity associated with the second information.

Based on the foregoing two possible designs, for a terminal device having a poor crystal oscillator, frequency of performing clock synchronization by the terminal device can be increased by increasing frequency of sending the time provision information, thereby improving clock synchronization accuracy and reducing a clock error. For a terminal device having a good crystal oscillator, frequency of performing clock synchronization by the terminal device can be reduced by reducing frequency of sending the time provision information, thereby reducing power consumption caused by the clock synchronization performed by the terminal device, and improving an energy saving effect.

In a possible design, when the time provision requirement of the terminal device includes the periodic time provision requirement, that the network device sends time provision information to the terminal device includes: The network device periodically sends the time provision information to the terminal device based on a periodicity associated with the periodic time provision requirement.

Based on the possible design, the network device periodically sends the time provision information to the terminal device based on the periodicity associated with the periodic time provision requirement, to meet the time provision requirement of the terminal device, thereby improving reliability of clock synchronization performed by the terminal device.

In a possible design, when the time provision requirement of the terminal device includes the periodic time provision requirement, that the network device sends time provision information to the terminal device includes: The network device sends the time provision information to the terminal device in a propagation delay compensation PDC manner based on a periodicity associated with the periodic time provision requirement, where the PDC manner includes one or more of the following: a round trip time RTT manner and a timing advance TA-based manner.

Based on the possible design, the network device may also send the time provision information to the terminal device in the PDC manner, to improve clock synchronization accuracy.

In a possible design, when the time provision requirement of the terminal device includes the time provision service coverage area requirement, that the network device sends time provision information to the terminal device includes: The network device determines, based on the time provision service coverage area requirement and location information of the terminal device, whether the terminal device is in a first coverage area, where the time provision service coverage area requirement indicates the first coverage area; and the network device sends the time provision information to the terminal device if the terminal device is in the first coverage area.

Based on the possible design, the network device may send the time provision information to the terminal device when the terminal device is in the first coverage area, to improve clock synchronization accuracy.

In a possible design, when the terminal device is handed over from the network device to a target network device, the network device sends the time provision requirement of the terminal device to the target network device.

Based on the possible design, when the terminal device handed over to the target network device, the target network device may send the time provision information to the terminal device based on the time provision requirement of the terminal device, to reduce a time provision delay, thereby improving clock synchronization accuracy.

In a possible design, the first information further includes one or more of the following: a clock synchronization type, clock synchronization error precision, and a clock source type.

In a possible design, the network device sends second indication information to the terminal device, where the second indication information indicates a time provision manner in which the network device sends the time provision information to the terminal device.

Based on the possible design, the terminal device may determine, based on the second indication information, the time provision manner in which the network device sends the time provision information, and then receive, based on the time provision manner, the time provision information sent by the network device, to complete clock synchronization, thereby improving clock synchronization accuracy.

In a possible design, if the first network element is the time sensitive communication and time synchronization function network element, that the network device receives first information from a first network element includes: The network device receives the first information from the time sensitive communication and time synchronization function network element through a mobility management network element.

In a possible design, before the network device receives first information from a first network element, the method further includes: The network device receives a time provision request from the terminal device, where the time provision request includes identification information of the terminal device, and the time provision request is for requesting to provide time for the terminal device; and the network device sends the time provision request to the first network element.

In a possible design, the time provision request includes the time provision requirement of the terminal device; or the time provision request includes a time keeping capability of the terminal device, where the time keeping capability is for determining the time provision requirement of the terminal device.

Based on the foregoing two possible designs, the network device may send, to the first network element, the time provision request sent by the terminal device, and the first network element sends the first information to the network device based on the time provision request of the terminal device.

According to a second aspect, an embodiment of this application provides a communication method. The method may include: A time sensitive communication and time synchronization function network element receives a time provision request from a second network element, where the second network element is an application function network element or a terminal device, the time provision request includes identification information of the terminal device, and the time provision request is for requesting to provide time for terminal device; the time sensitive communication and time synchronization function network element obtains a time provision requirement of the terminal device and/or clock subscription data of the terminal device; and the time sensitive communication and time synchronization function network element sends first information to a network device if the time sensitive communication and time synchronization function network element determines, based on the time provision requirement of the terminal device and/or the clock subscription data of the terminal device, to provide time for the terminal device, where the first information includes first indication information, a first error budget, and the time provision requirement of the terminal device, the first indication information is for activating a time provision capability of the network device, and the first error budget indicates a time provision error range between the network device and the terminal device.

Based on the second aspect, in a process in which the network device provides time for the terminal device, the time sensitive communication and time synchronization function network element may not only send, to the network device, the first indication information and the first error budget that are for activating the time provision capability of the network device, but also send the time provision requirement of the terminal device to the network device, so that the network device provides time for the terminal device based on the time provision requirement of the terminal device, to meet the time provision requirement of the terminal device, thereby improving reliability of clock synchronization performed by the terminal device.

In a possible design, the time provision requirement of the terminal device includes one or more of the following: a periodic time provision requirement and a time provision service coverage area requirement.

In a possible design, that the time sensitive communication and time synchronization function network element obtains a time provision requirement of the terminal device includes: The time provision request includes the time provision requirement of the terminal device; or the time provision request includes a time keeping capability of the terminal device, and the time sensitive communication and time synchronization function network element determines the time provision requirement of the terminal device based on the time keeping capability; or the time sensitive communication and time synchronization function network element receives the clock subscription data of the terminal device from a network storage network element, where the clock subscription data of the terminal device includes the time provision requirement of the terminal device.

Based on the possible design, the time sensitive communication and time synchronization function network element may determine the time provision requirement of the terminal device based on the time provision request, or may determine the time provision requirement of the terminal device based on the time keeping capability of the terminal device, or determine the time provision requirement of the terminal device based on the clock subscription data of the terminal device. A plurality of feasible solutions are provided for the time sensitive communication and time synchronization function network element to determine the time provision requirement of the terminal device.

In a possible design, that the time sensitive communication and time synchronization function network element determines, based on the time provision requirement of the terminal device and the clock subscription data of the terminal device, to provide time for the terminal device includes: If the clock subscription data of the terminal device supports the time provision requirement of the terminal device, the time sensitive communication and time synchronization function network element determines to provide time for the terminal device.

Based on the possible design, the time sensitive communication and time synchronization function network element may determine, when the clock subscription data of the terminal device supports the time provision requirement of the terminal device, to provide time for the terminal device. This provides a feasible solution for the time sensitive communication and time synchronization function network element to determine to provide time for the terminal device.

In a possible design, the time provision request further includes one or more of the following: a clock synchronization type, clock synchronization error precision, and a clock source type; and/or the first information further includes one or more of the following: a clock synchronization type, clock synchronization error precision, and a clock source type.

In a possible design, that the time sensitive communication and time synchronization function network element sends first information to a network device includes: The time sensitive communication and time synchronization function network element sends the first information to the network device through a mobility management network element.

According to a third aspect, an embodiment of this application provides a communication method. The method may include: A mobility management network element obtains a time provision requirement of a terminal device and/or clock subscription data of the terminal device; the mobility management network element sends first information to a network device if the mobility management network element determines, based on the time provision requirement of the terminal device and/or the clock subscription data of the terminal device, to provide time for the terminal device, where the first information includes first indication information, a first error budget, and the time provision requirement of the terminal device, the first indication information is for activating a time provision capability of the network device, and the first error budget indicates a time provision error range between the network device and the terminal device.

Based on the third aspect, in a process in which the network device provides time for the terminal device, the mobility management network element may not only send, to the network device, the first indication information and the first error budget that are for activating the time provision capability of the network device, but also send the time provision requirement of the terminal device to the network device, so that the network device provides time for the terminal device based on the time provision requirement of the terminal device, to meet the time provision requirement of the terminal device, thereby improving reliability of clock synchronization performed by the terminal device.

In a possible design, the time provision requirement of the terminal device includes one or more of the following: a periodic time provision requirement and a time provision service coverage area requirement.

In a possible design, that the mobility management network element obtains a time provision requirement of a terminal device includes: The mobility management network element receives the clock subscription data of the terminal device from a network storage network element, where the clock subscription data of the terminal device includes the time provision requirement of the terminal device; or the mobility management network element receives a time provision request from the terminal device, where the time provision request includes the time provision requirement of the terminal device; or the mobility management network element receives a time provision request from the terminal device, where the time provision request includes a time keeping capability of the terminal device; and the mobility management network element determines the time provision requirement of the terminal device based on the time keeping capability.

Based on the possible design, the mobility management network element may determine the time provision requirement of the terminal device based on the time provision request, or may determine the time provision requirement of the terminal device based on the time keeping capability of the terminal device, or determine the time provision requirement of the terminal device based on the clock subscription data of the terminal device. A plurality of feasible solutions are provided for the mobility management network element to determine the time provision requirement of the terminal device.

In a possible design, that the mobility management network element determines, based on the time provision requirement of the terminal device and the clock subscription data of the terminal device, to provide time for the terminal device includes: If the clock subscription data of the terminal device supports the time provision requirement of the terminal device, the mobility management network element determines to provide time for the terminal device.

Based on the possible design, the mobility management network element may determine, when the clock subscription data of the terminal device supports the time provision requirement of the terminal device, to provide time for the terminal device. This provides a feasible solution for the mobility management network element to determine to provide time for the terminal device.

In a possible design, the clock subscription data further includes one or more of the following: a clock synchronization type, clock synchronization error precision, and a clock source type; and/or the first information further includes one or more of the following: a clock synchronization type, clock synchronization error precision, and a clock source type.

According to a fourth aspect, an embodiment of this application provides a communication apparatus. The communication apparatus may be used in the network device in the first aspect or the possible designs of the first aspect, to implement functions performed by the network device. The communication apparatus may be the network device, or may be a chip, a system on chip, or the like of the network device. The communication apparatus may be implemented by hardware performing the functions performed by the network device or by hardware executing corresponding software. The hardware or the software includes one or more modules corresponding to the foregoing function, for example, a transceiver module and a processing module. The transceiver module is configured to receive first information from a first network element, where the first network element is a mobility management network element or a time sensitive communication and time synchronization function network element, the first information includes first indication information, a first error budget, and a time provision requirement of a terminal device, the first indication information is for activating a time provision capability of the network device, and the first error budget indicates a time provision error range between the network device and the terminal device; and the transceiver module is further configured to send time provision information to the terminal device based on the first error budget and the time provision requirement of the terminal device.

In a possible design, the time provision requirement of the terminal device includes one or more of the following: a periodic time provision requirement and a time provision service coverage area requirement.

In a possible design, the transceiver module is further configured to periodically broadcast second information when the time provision requirement of the terminal device includes the periodic time provision requirement, where the second information includes the time provision information; and the transceiver module is further configured to periodically send third information to the terminal device if a periodicity associated with the periodic time provision requirement is less than a broadcast periodicity associated with the second information, where the third information includes the time provision information, and a sending periodicity of the third information is less than the broadcast periodicity; or the transceiver module is further configured to periodically send fourth information to the terminal device if a periodicity associated with the periodic time provision requirement is greater than a broadcast periodicity associated with the second information, where the fourth information includes the time provision information, and a sending periodicity of the fourth information is greater than the broadcast periodicity.

In a possible design, the transceiver module is further configured to periodically broadcast second information when the time provision requirement of the terminal device includes the periodic time provision requirement, where the second information includes the time provision information; and the transceiver module is further configured to periodically broadcast third information if a periodicity associated with the periodic time provision requirement is less than a broadcast periodicity associated with the second information, where the third information includes the time provision information, and a sending periodicity of the third information is less than the broadcast periodicity associated with the second information; or the transceiver module is further configured to periodically broadcast fourth information if a periodicity associated with the periodic time provision requirement is greater than a broadcast periodicity associated with the second information, where the fourth information includes the time provision information, and a sending periodicity of the fourth information is greater than the broadcast periodicity associated with the second information.

In a possible design, the transceiver module is further configured to: when the time provision requirement of the terminal device includes the periodic time provision requirement, periodically send the time provision information to the terminal device based on a periodicity associated with the periodic time provision requirement.

In a possible design, the transceiver module is further configured to: when the time provision requirement of the terminal device includes the periodic time provision requirement, send the time provision information to the terminal device in a propagation delay compensation PDC manner based on a periodicity associated with the periodic time provision requirement, where the PDC manner includes one or more of the following: a round trip time RTT manner and a timing advance TA-based manner.

In a possible design, the processing module is configured to: when the time provision requirement of the terminal device includes the time provision service coverage area requirement, determine, based on the time provision service coverage area requirement and location information of the terminal device, whether the terminal device is in a first coverage area, where the time provision service coverage area requirement indicates the first coverage area; and the transceiver module is further configured to send the time provision information to the terminal device if the terminal device is in the first coverage area.

In a possible design, the transceiver module is further configured to: when the terminal device is handed over from the network device to a target network device, send the time provision requirement of the terminal device to the target network device.

In a possible design, the first information further includes one or more of the following: a clock synchronization type, clock synchronization error precision, and a clock source type.

In a possible design, the transceiver module is further configured to send second indication information to the terminal device, where the second indication information indicates a time provision manner in which the network device sends the time provision information to the terminal device.

In a possible design, the transceiver module is further configured to: if the first network element is the time sensitive communication and time synchronization function network element, receive the first information from the time sensitive communication and time synchronization function network element through a mobility management network element.

In a possible design, the transceiver module is further configured to: before receiving the first information from the first network element, receive a time provision request from the terminal device, where the time provision request includes identification information of the terminal device, and the time provision request is for requesting to provide time for the terminal device; and the transceiver module is further configured to send the time provision request to the first network element.

In a possible design, the time provision request includes the time provision requirement of the terminal device; or the time provision request includes a time keeping capability of the terminal device, where the time keeping capability is for determining the time provision requirement of the terminal device.

It should be noted that the modules in the fourth aspect or the possible designs of the fourth aspect may perform the corresponding functions in the method examples in the first aspect. For details, refer to the detailed descriptions in the method examples. For beneficial effects, refer to the related descriptions in the first aspect. Details are not described herein again.

According to a fifth aspect, an embodiment of this application provides a communication apparatus. The communication apparatus may be used in the time sensitive communication and time synchronization function network element in the second aspect or the possible designs of the second aspect, to implement functions performed by the time sensitive communication and time synchronization function network element. The communication apparatus may be the time sensitive communication and time synchronization function network element, or may be a chip, a system on chip, or the like of the time sensitive communication and time synchronization function network element. The communication apparatus may be implemented by hardware performing the functions performed by the time sensitive communication and time synchronization function network element or by hardware executing corresponding software. The hardware or the software includes one or more modules corresponding to the foregoing function, for example, a transceiver module and a processing module. The transceiver module is configured to receive a time provision request from a second network element, where the second network element is an application function network element or a terminal device, the time provision request includes identification information of the terminal device, and the time provision request is for requesting to provide time for terminal device; the transceiver module is further configured to obtain a time provision requirement of a terminal device and/or clock subscription data of the terminal device; and the transceiver module is further configured to send first information to a network device if the processing module determines, based on the time provision requirement of the terminal device and/or the clock subscription data of the terminal device, to provide time for the terminal device, where the first information includes first indication information, a first error budget, and the time provision requirement of the terminal device, the first indication information is for activating a time provision capability of the network device, and the first error budget indicates a time provision error range between the network device and the terminal device.

In a possible design, the time provision requirement of the terminal device includes one or more of the following: a periodic time provision requirement and a time provision service coverage area requirement.

In a possible design, that the transceiver module obtains the time provision requirement of the terminal device includes that: The time provision request includes the time provision requirement of the terminal device; or the time provision request includes a time keeping capability of the terminal device, and the processing module determines the time provision requirement of the terminal device based on the time keeping capability; or the transceiver module receives the clock subscription data of the terminal device from a network storage network element, where the clock subscription data of the terminal device includes the time provision requirement of the terminal device.

In a possible design, the processing module is further configured to determine to provide time for the terminal device if the clock subscription data of the terminal device supports the time provision requirement of the terminal device.

In a possible design, the time provision request further includes one or more of the following: a clock synchronization type, clock synchronization error precision, and a clock source type; and/or the first information further includes one or more of the following: a clock synchronization type, clock synchronization error precision, and a clock source type.

In a possible design, the transceiver module is further configured to send the first information to the network device through a mobility management network element.

It should be noted that the modules in the fifth aspect or the possible designs of the fifth aspect may perform the corresponding functions in the method examples in the second aspect. For details, refer to the detailed descriptions in the method examples. For beneficial effects, refer to the related descriptions in the second aspect. Details are not described herein again.

According to a sixth aspect, an embodiment of this application provides a communication apparatus. The communication apparatus may be used in the mobility management network element in the third aspect or the possible designs of the third aspect, to implement functions performed by the mobility management network element. The communication apparatus may be the mobility management network element, or may be a chip, a system on chip, or the like of the mobility management network element. The communication apparatus may be implemented by hardware performing the functions performed by the mobility management network element or by hardware executing corresponding software. The hardware or the software includes one or more modules corresponding to the foregoing function, for example, a transceiver module and a processing module. The transceiver module is configured to obtain a time provision requirement of a terminal device and/or clock subscription data of the terminal device; and the transceiver module is further configured to send first information to a network device if the processing module determines, based on the time provision requirement of the terminal device and/or the clock subscription data of the terminal device, to provide time for the terminal device, where the first information includes first indication information, a first error budget, and the time provision requirement of the terminal device, the first indication information is for activating a time provision capability of the network device, and the first error budget indicates a time provision error range between the network device and the terminal device.

In a possible design, the time provision requirement of the terminal device includes one or more of the following: a periodic time provision requirement and a time provision service coverage area requirement.

In a possible design, that the transceiver module obtains the time provision requirement of the terminal device includes: The transceiver module receives the clock subscription data of the terminal device from a network storage network element, where the clock subscription data of the terminal device includes the time provision requirement of the terminal device; or the transceiver module receives a time provision request from the terminal device, where the time provision request includes the time provision requirement of the terminal device; or the transceiver module receives a time provision request from the terminal device, where the time provision request includes a time keeping capability of the terminal device; and the processing module determines the time provision requirement of the terminal device based on the time keeping capability.

In a possible design, the processing module is further configured to determine to provide time for the terminal device if the clock subscription data of the terminal device supports the time provision requirement of the terminal device.

In a possible design, the clock subscription data further includes one or more of the following: a clock synchronization type, clock synchronization error precision, and a clock source type; and/or the first information further includes one or more of the following: a clock synchronization type, clock synchronization error precision, and a clock source type.

It should be noted that the modules in the sixth aspect or the possible designs of the sixth aspect may perform the corresponding functions in the method examples in the third aspect. For details, refer to the detailed descriptions in the method examples. For beneficial effects, refer to the related descriptions in the third aspect. Details are not described herein again.

According to a seventh aspect, an embodiment of this application provides a communication apparatus. The communication apparatus includes one or more processors. The one or more processors are configured to run a computer program or instructions. When the one or more processors execute the computer instructions or the instructions, the communication apparatus is enabled to perform the communication method according to any one of the first aspect to the third aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the third aspect, and perform processing based on information and/or generate information.

According to a ninth aspect, an embodiment of this application provides a computer-readable storage medium. The computer-readable storage medium stores computer instructions or a program. When the computer instructions or the program is run on a computer, the communication method according to any one of the first aspect to the third aspect is performed.

According to a tenth aspect, an embodiment of this application provides a computer program product including computer instructions. When the computer instructions are run on a computer, the communication method according to any one of the first aspect to the third aspect is performed.

According to an eleventh aspect, an embodiment of this application provides a computer program. When the computer program is run on a computer, the communication method according to any one of the first aspect to the third aspect is performed.

For technical effects brought by any design manner of the seventh aspect to the eleventh aspect, refer to the technical effects brought by any one of the first aspect to the third aspect.

According to a twelfth aspect, a communication system is provided, where the communication system may include the network device according to the fourth aspect and the time sensitive communication and time synchronization function network element according to the fifth aspect; or include the network device according to the fourth aspect and the mobility management network element according to the sixth aspect.

### BRIEF DESCRIPTION OF DRAWINGS

FIG. 1 is a flowchart of performing access stratum clock synchronization on a terminal device according to an embodiment of this application;
FIG. 2 is a diagram of a time provision method according to an embodiment of this application;
FIG. 3 is a diagram of a communication system according to an embodiment of this application;
FIG. 4 is a diagram of a 5G communication system according to an embodiment of this application;
FIG. 5 is a composition diagram of a communication apparatus according to an embodiment of this application;
FIG. 6 is a flowchart of a communication method according to an embodiment of this application;
FIG. 7 is a flowchart of a communication method according to an embodiment of this application;
FIG. 8 is a flowchart of a communication method according to an embodiment of this application;
FIG. 9 is a diagram of a method of sending time provision information according to an embodiment of this application;
FIG. 10 is a diagram of a method of sending time provision information according to an embodiment of this application;
FIG. 11 is a diagram of a method of sending time provision information according to an embodiment of this application;
FIG. 12 is a diagram of a method of sending time provision information according to an embodiment of this application;
FIG. 13 is a diagram of a method of sending time provision information according to an embodiment of this application;
FIG. 14 is a composition diagram of a communication apparatus according to an embodiment of this application; and
FIG. 15 is a composition diagram of a communication apparatus according to an embodiment of this application.

### DESCRIPTION OF EMBODIMENTS

Before embodiments of this application are described, technical terms used in embodiments of this application are described.

**Broadcast time provision:** After clock synchronization is performed between clock information on a network device and a 5th generation mobile communication technology grandmaster (5th generation mobile communication technology grandmaster, 5G GM), the network device may send the time information to all terminal devices in a coverage area of the network device by using system information block 9 (system information block 9, SIB 9) signaling in a broadcast message. Because only one type of single time provision precision is supported in a broadcast time provision area, time provision reliability of an entire 5G communication system depends on reliability of a single clock source (for example, the network device), and clock service elasticity of the communication system is poor.

**High-precision time provision:** The broadcast time provision-based single time provision precision and the clock service elasticity are poor. The high-precision time provision can be enhanced from a plurality of aspects. An authorization mechanism for 5G time provision information distribution is one of the aspects. Differentiated time provision solutions may be implemented for different time provision terminal devices and time provision requests.

Diversity of time provision services of the terminal devices is intended to support differentiated time provision services of the terminal devices, and may be specifically a terminal device-level differentiated time provision clock service. The differentiated time provision clock service means that differentiated clock information may be provided for specific request content of the time provision services of the terminal devices. For example, (1) a time provision service of a terminal device may need high-precision clock information. For example, the terminal device has a differentiated requirement on an error budget (Uu error budget) of a time provision error between a network device and the terminal device of the time provision service or an error budget (error budget) of a total error requirement, for example, 1 us, 250 ns, or higher-level 100 ns (2) Differentiated time provision service types may be classified into access stratum clock synchronization and generalized precision time protocol (generalized precision time protocol, gPTP) clock synchronization. If an authorization result of the terminal device supports only the access stratum clock synchronization, the terminal device can only receive clock synchronization information of the network device, and cannot perform gPTP clock synchronization. (3) A time provision form of the terminal device may be a broadcast or unicast time provision form performed for the time provision requirement of the terminal device. (4) For a requirement on time provision service time of the terminal device, a periodic time provision service, or a time provision start/end service may be selected for the time provision of the terminal device to enhance control of the time provision service of the terminal device. (5) For a requirement of the time provision service of the terminal device on a clock source, for example, time provision service information required by the terminal device needs to be a global navigation satellite system (global navigation satellite system, GNSS) clock source, a 5G communication technology grandmaster, or a network time protocol (network time protocol, NTP) clock source.

**A time provision exposure capability of a 5G communication system** is a network function that can be exposed to an external network. The time provision exposure capability of the 5G communication system may be activated and deactivated by an application function (application function, AF) network element, to implement time provision for another device (like a core network device, a network device, or a terminal device).

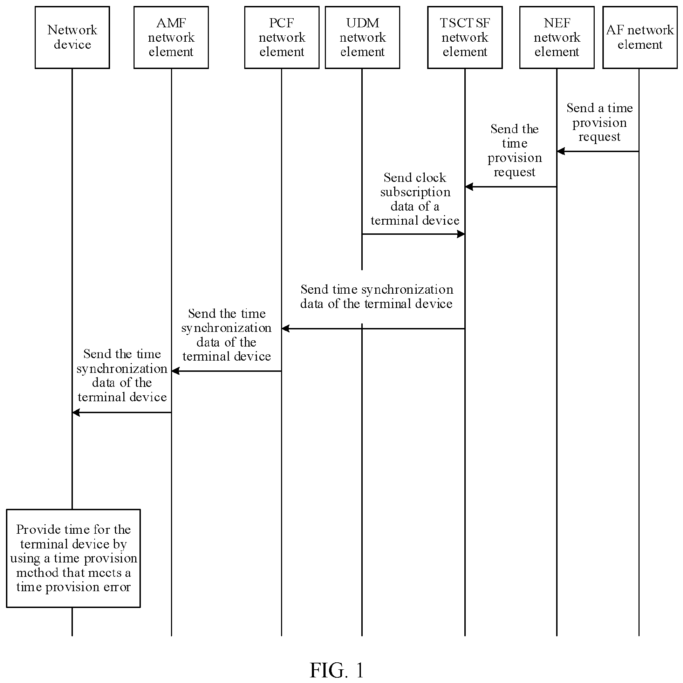

For example, the 5G communication system performs access stratum clock synchronization on the terminal device. As shown in FIG. 1, an AF network element may send a time provision request to a network exposure function (network exposure function, NEF) network element, and the NEF network element may send the received time provision request to a time sensitive communication and time synchronization function (time sensitive communication and time synchronization function, TSCTSF) network element. The time provision request may include identification information of the terminal device. The time provision request may further include a clock synchronization service parameter, and the clock synchronization service parameter may be an error budget (error budget) indicating a time provision error upper limit.

If the time provision request received by the TSCTSF network element carries the error budget, the TSCTSF network element may use the error budget as a total error requirement. If the time provision request does not carry the error budget, the TSCTSF network element may use a preconfigured default value as the error budget. The TSCTSF network element may use a difference between the error budget and an error (for example, a preconfigured error) of a core network as the time provision error (Uu error budget) between the network device and the terminal device. The TSCTSF network element may activate a time provision capability of the network device after determining the network device (for example, a serving network device of the terminal device) that provides time for the terminal device. The TSCTSF network element may send time synchronization data of the terminal device to a policy control function (policy control function, PCF) network element. The time synchronization data may include the identification information of the terminal device, the time provision error between the network device and the terminal device, and a time provision indication indicating the network device to provide time.

The PCF network element includes the received time synchronization data of the terminal device in an access and mobility (access and mobility, AM) policy, and delivers the access and mobility policy to an access and mobility management function (access and mobility management function, AMF) network element. The AMF network element delivers the received time synchronization data of the terminal device to the network device, and the network device provides time for the terminal device by using a time provision method that meets a time provision error.

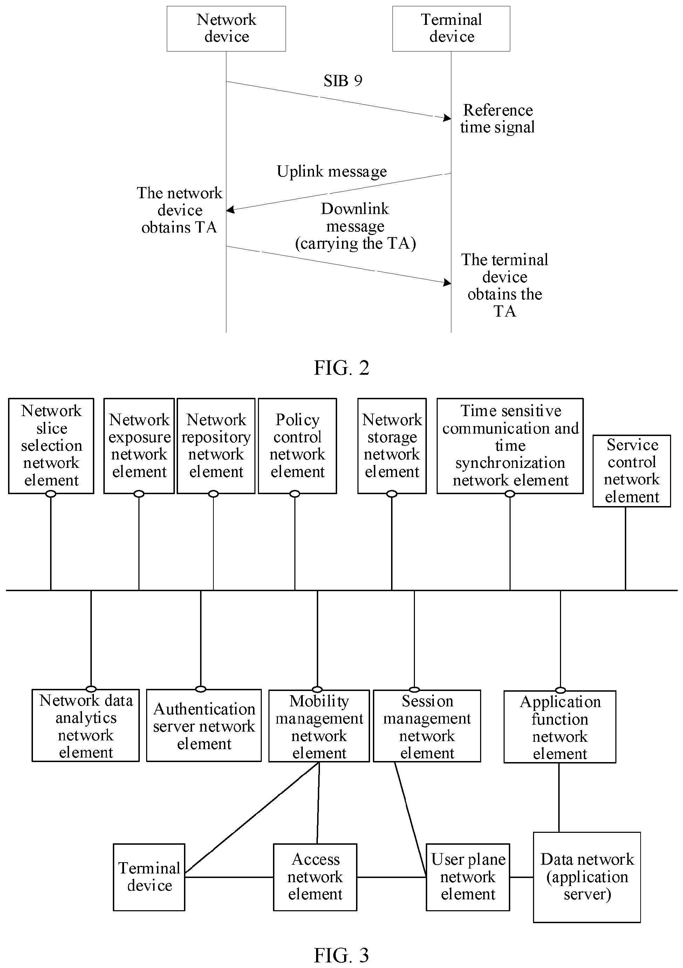

For example, as shown in FIG. 2, the network device may send a reference time signal to the terminal device in a manner of broadcasting a SIB 9 when performing time provision for the terminal device, and the terminal device performs time synchronization based on the reference time signal. Alternatively, a timing advance (timing advance, TA)-based network device pre-compensation method or a terminal device self-compensation manner may be used, or a round trip time (round trip, RTT)-based manner may be used to perform clock synchronization based on a TA value carried in an uplink message or a downlink message.

Different time provision methods may have different time provision errors, and different network devices may also have different time provision errors.

In the foregoing time provision process, the network device provides time for the terminal device based on a maximum time provision error, and a clock synchronization requirement of the terminal device may fail to be met, affecting clock synchronization of the terminal device.

In view of this, to meet the clock synchronization requirement of the terminal device, time provision may be performed for the terminal device based on the clock subscription data of the terminal device.

Optionally, as shown in FIG. 1, a unified data management (unified data management, UDM) network element may include the clock subscription data of the terminal device. The clock subscription data may include a requirement of the terminal device on the time provision error, a requirement of the terminal device on starting/stopping the time provision service, a service area of the terminal device, a requirement of the terminal device on a time provision periodicity, and the like. After receiving a time provision request, a TSCTSF network element may obtain the clock subscription data of the terminal device from the UDM network element, and indicate, with reference to the time provision request and the clock subscription data of the terminal device, the network device to provide time for the terminal device.

However, currently, there are no related descriptions of performing time provision for the terminal device based on the clock synchronization requirement of the terminal device. How to provide time for the terminal device based on the clock synchronization requirement of the terminal device becomes an urgent technical problem to be resolved.

To resolve the technical problem, an embodiment of this application provides a communication method. In the method, a network device may receive first information from a first network element, where the first network element is a mobility management network element or a time sensitive communication and time synchronization function network element, the first information includes first indication information, a first error budget, and a time provision requirement of a terminal device, the first indication information is for activating a time provision capability of the network device, and the first error budget indicates a time provision error range between the network device and the terminal device; and the network device sends time provision information to the terminal device based on the first error budget and the time provision requirement of the terminal device.

In this embodiment of this application, in a process in which the network device provides time for the terminal device, the network device may not only receive, from the first network element, the first indication information and the first error budget that are for activating the time provision capability of the network device, but also receive the time provision requirement of the terminal device from the first network element. The time provision is performed for the terminal device based on the time provision requirement of the terminal device, to meet the time provision requirement of the terminal device, thereby improving reliability of clock synchronization performed by the terminal device.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, NR V2X) system. The communication method may also be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, the internet of things (internet of things, IoT), and another next generation communication system, for example, a future communication system like 6G. Alternatively, the communication system may be a non-3GPP communication system. This is not limited.

The following uses FIG. 3 as an example to describe a communication system provided in an embodiment of this application.

FIG. 3 is a diagram of a communication system according to an embodiment of this application. As shown in FIG. 3, the communication system may include one or more terminal devices, a network device, and a core network device. The core network device may include network elements such as a time sensitive communication and time synchronization network element, a mobility management network element, a policy control network element, an application function network element, and a network storage network element. This is not limited.

The terminal device in FIG. 3 may be located in a cell coverage area of the network device. The terminal device may perform air interface communication with the network device through an uplink (uplink, UL) or a downlink (downlink, DL). In a UL direction, the terminal device sends data to the network device, the network device forwards the received data to the core network device, and the core network device processes the data. In a DL direction, the core network device may send data to the network device, and the network device processes the data and sends processed data to the terminal device through an air interface. The terminal device may communicate with the core network device through a specific interface. For example, the terminal device may communicate with the mobility management network element in the core network device through an N1 interface.

The terminal device in FIG. 3 may also be referred to as user equipment (user equipment, UE), a terminal (terminal), a mobile station (mobile station, MS), a mobile terminal (mobile terminal, MT), or the like. Specifically, the terminal device in FIG. 3 may be a mobile phone (mobile phone), a tablet computer, or a computer having a wireless transceiver function. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The network device in FIG. 3 may be any device having a wireless transceiver function, and is mainly configured to implement functions such as a radio physical control function, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be an access point (access point, AP), a base station (NodeB, NB), an enhanced base station (enhance NodeB, eNB), a next-generation base station (NR NodeB, gNB), a transmission reception point (transmission reception point, TRP), a transmission point (transmission point, TP), another access node, or the like.

The time sensitive communication and time synchronization network element in FIG. 3 is mainly responsible for collecting and generating a parameter related to a delay-sensitive service.

The mobility management network element in FIG. 3 is mainly responsible for work such as access authentication and mobility management of the terminal device, and signaling exchange between functional network elements, for example, managing a registration status of a user, a connection status of the user, user registration and network access, tracking area update, user authentication during cell handover, and key security.

The policy control network element in FIG. 3 may be configured to provide a policy, for example, a quality of service (quality of service) policy, for the mobility management network element and a session management network element.

The policy control network element may include an access and mobility control policy control network element and a session management policy control network element. The access and mobility control policy control network element may manage information related to mobility and registration information of the terminal device, for example, a terminal device policy. The session management policy control network element may manage a session-related policy, receive session management-related information of the application function network element, and interact with the session management network element.

The application function network element in FIG. 3 is mainly an intermediate function entity that provides interaction between an application server in a data network (data network, DN) and a network element in a core network. The application server may implement dynamic control on network quality of service and charging, and obtain running information of a network element in the core network through the application function network element. In embodiments of this application, the application function network element may be a function entity deployed by an operator, or may be a functional entity deployed by a service provider. The service provider may be a third-party service provider, or may be a service provider inside the operator. This is not limited.

The network storage network element in FIG. 3 may be configured to store user data, such as subscription information and authentication/authorization information.

It should be noted that the terminal device, the network device, and the core network device in this embodiment of this application each may be one or more chips, or may be a system on chip (system on chip, SoC), or the like. FIG. 3 is merely an example accompany drawing, and a quantity of devices included in FIG. 3 is not limited. In addition, in addition to the devices shown in FIG. 3, the communication system may further include another device. Names of the devices and the links in FIG. 3 are not limited. In addition to the names shown in FIG. 3, the devices and the links may have other names. In addition to the network elements shown in FIG. 3, the network shown in FIG. 3 may further include a session management network element, a user plane network element, a network slice selection network element, a network repository network element, an authentication server network element, a network data analytics network element, a network exposure network element, and the like. This is not limited.

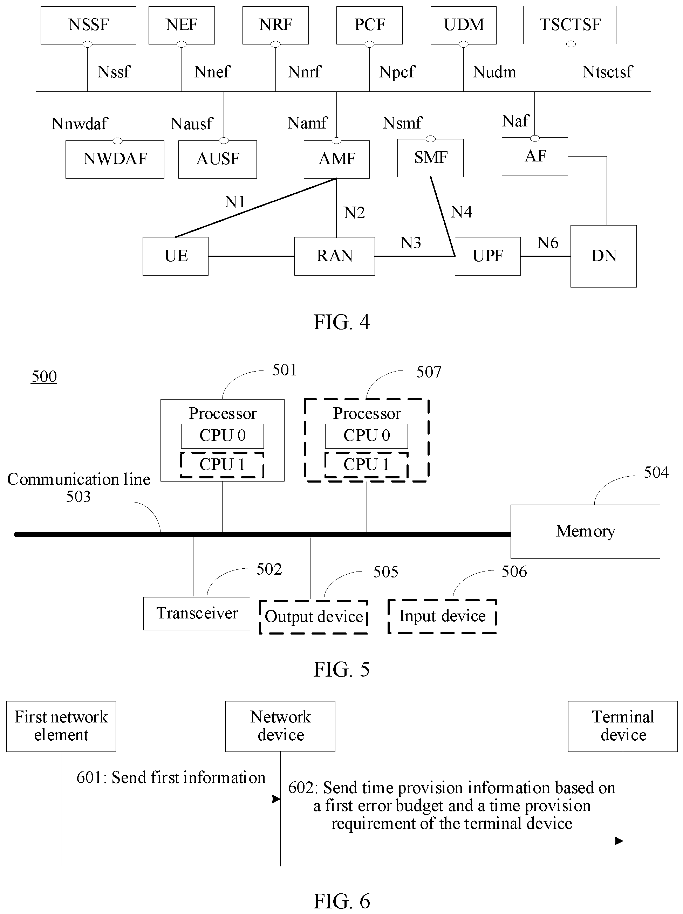

For example, the communication system shown in FIG. 3 is a 5G communication system. As shown in FIG. 4, a network element or entity corresponding to the network device may be a radio access network (radio access network, RAN) in the 5G communication system, a network element or entity corresponding to the time sensitive communication and time synchronization network element may be a time sensitive communication and time synchronization function (time sensitive communication and time synchronization function, TSCTSF) in the 5G communication system, a network element or entity corresponding to the mobility management network element may be an access and mobility management function (access and mobility management function, AMF) in the 5G communication system, the policy control network element may be a policy control function (policy control function, PCF) in the 5G communication system, a network element or entity corresponding to the application function network element may be an application function (application function, AF) in the 5G communication system, a network element or entity corresponding to the network storage network element may be an NRF, a unified data repository (unified data repository, UDR), or unified data management (unified data management, UDM) in the 5G communication system, a network element or entity corresponding to the session management network element may be a session management function (session management function, SMF) in the 5G communication system, a network element or entity corresponding to the user plane network element may be a user plane function (user plane function, UPF) in the 5G communication system, a network element or entity corresponding to the network slice selection network element may be a network slice selection function (network slice selection function, NSSF) in the 5G communication system, a network element or entity corresponding to the network repository network element may be a network repository function (network repository function, NRF) in the 5G communication system, a network element or entity corresponding to the authentication server network element may be an authentication server function (authentication server function, AUSF) in the 5G communication system, a network element or entity corresponding to the network data analytics network element may be a network data analytics function (network data analytics function, NWDAF) in the 5G communication system, a network element or entity corresponding to the network exposure network element may be a network exposure function (network exposure function, NEF) in the 5G communication system, a network element or entity corresponding to the service control network element may be a service control point (service control point, SCP) in the 5G communication system, and the like.

As shown in FIG. 4, the terminal device may communicate with the AMF through a next generation (next generation, N) 1 interface (N1 for short), the RAN device communicates with the AMF through an N2 interface (N2 for short), the RAN device communicates with the UPF through an N3 interface (N3 for short), and the UPF communicates with the application server in the DN through an N6 interface. Core network elements may communicate with each other through service-oriented interfaces. For example, the AMF may communicate with another core network element through an Namf interface. The SMF may communicate with another core network element through an Nsmf interface. The PCF may communicate with another core network element through an Npcf interface. The NSSF may communicate with another core network element through an Nnssf interface. The NEF may communicate with another core network element through an Nnef interface. The NRF may communicate with another core network element through an Nnrf interface. The UDM may communicate with another core network element through an Nudr interface. The NWDAF may communicate with another core network element through an Nnwdaf interface. The AUSF may communicate with another core network element through an Nausf interface.

During specific implementation, as shown in FIG. 3 or FIG. 4, each terminal device, each network device, and each core network device may use a composition structure shown in FIG. 5, or include components shown in FIG. 5. FIG. 5 is a composition diagram of a communication apparatus 500 according to an embodiment of this application. The communication apparatus 500 may be a terminal device or a chip or a system on chip in the terminal device, or may be a network device or a chip or a system on chip in the network device, or may be a core network device or a chip or a system on chip in a core network element. As shown in FIG. 5, the communication apparatus 500 includes a processor 501, a transceiver 502, and a communication line 503.

Further, the communication apparatus 500 may further include a memory 504. The processor 501, the memory 504, and the transceiver 502 may be connected through the communication line 503.

The processor 501 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module. This is not limited.

The transceiver 502 is configured to communicate with another device or another communication network. The another communication network may be an Ethernet, a radio access network (radio access network, RAN), a wireless local area network (wireless local area network, WLAN), or the like. The transceiver 502 may be a module, a circuit, a transceiver, or any apparatus that can implement communication.

The communication line 503 is configured to transmit information between components included in the communication apparatus 500.

The memory 504 is configured to store instructions. The instructions may be a computer program.

The memory 504 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 504 may be independent of the processor 501, or may be integrated with the processor 501. The memory 504 may be configured to store instructions, program code, some data, or the like. The memory 504 may be located in the communication apparatus 500 or may be located outside the communication apparatus 500. This is not limited. The processor 501 is configured to execute the instructions stored in the memory 504, to implement a communication method provided in the following embodiments of this application.

In an example, the processor 501 may include one or more CPUs, for example, a CPU 0 and a CPU 1 in FIG. 5.

In an optional implementation, the communication apparatus 500 includes a plurality of processors. For example, in addition to the processor 501 in FIG. 5, the communication apparatus 500 may further include a processor 507.

In an optional implementation, the communication apparatus 500 further includes an output device 505 and an input device 506. For example, the input device 506 is a device, for example, a keyboard, a mouse, a microphone, or a joystick, and the output device 505 is a device, for example, a display or a speaker (speaker).

It should be noted that the communication apparatus 500 may be a desktop computer, a portable computer, a network server, a mobile phone, a tablet computer, a wireless terminal, an embedded device, a chip system, or a device having a similar structure in FIG. 5. In addition, the composition structure shown in FIG. 3 does not constitute a limitation on the communication apparatus. In addition to the components shown in FIG. 5, the communication apparatus may include more or fewer components than the components shown in the figure, or some components may be combined, or there may be a different component arrangement.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 3 or FIG. 4, refer to FIG. 6. A communication method provided in an embodiment of this application is described. A terminal device may be the terminal device in the communication system shown in FIG. 3 or FIG. 4, a network device may be the network device in the communication system shown in FIG. 3 or FIG. 4, and a core network device may be the core network device in the communication system shown in FIG. 3 or FIG. 4. The terminal device, the network device, and the core network device in the following embodiments may all have the components shown in FIG. 5. Processing performed by a single execution body (the terminal device, or the network device, or the core network device) shown in embodiments of this application may alternatively be performed by a plurality of execution bodies. These execution bodies may be logically and/or physically separated. This is not limited.

FIG. 6 is a flowchart of a communication method according to an embodiment of this application. As shown in FIG. 6, the method may include the following steps.

Step 601: A first network element sends first information to a network device, and correspondingly, the network device receives the first information from the first network element.

The first network element may be a mobility management network element or a time sensitive communication and time synchronization function network element, the first information may include first indication information, a first error budget, and a time provision requirement of a terminal device, the first indication information may be for activating a time provision capability of the network device, and the first error budget may indicate a time provision error range between the network device and the terminal device.

For example, the time provision requirement of the terminal device may include one or more of the following: a periodic time provision requirement and a time provision service coverage area requirement.

The periodic time provision requirement may indicate a time provision periodicity requirement of the terminal device, and the time provision service coverage area requirement may indicate a coverage area of the time provision of the terminal device.

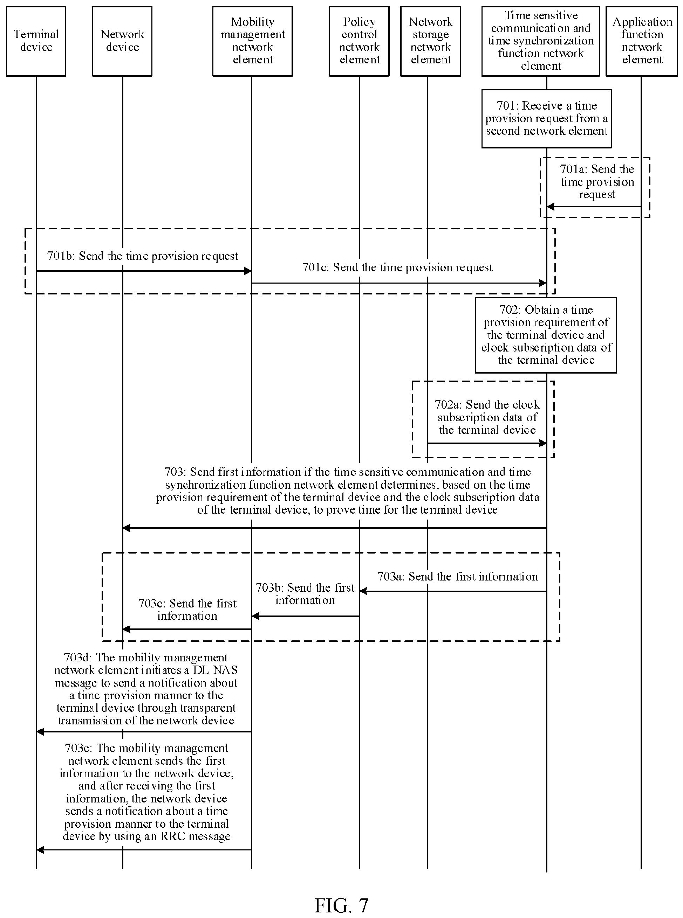

In a first possible design, for example, the first network element is the time sensitive communication and time synchronization function network element, and the time sensitive communication and time synchronization function network element may send the first information to the network device by using the method shown in FIG. 7.

FIG. 7 is a flowchart of a communication method according to an embodiment of this application. As shown in FIG. 7, the method may include the following steps.

Step 701: A second network element sends a time provision request to a time sensitive communication and time synchronization function network element, and correspondingly, the time sensitive communication and time synchronization function network element receives the time provision request from the second network element.

The second network element may be an application function network element or a terminal device, the time provision request may include identification information of the terminal device, and the time provision request may be for requesting to provide time for the terminal device.

In a first example, the second network element is the application function network element. As shown in step 701a in FIG. 7, the application function network element sends the time provision request to the time sensitive communication and time synchronization function network element.

Step 701a: The application function network element sends the time provision request to the time sensitive communication and time synchronization function network element, and correspondingly, the time sensitive communication and time synchronization function network element receives the time provision request from the application function network element.

The time provision request may include the identification information of the terminal device, and the time provision request may be for requesting to provide time for terminal device.

Optionally, the time provision request includes a time provision requirement of the terminal device.

For example, the application function network element may directly determine the time provision requirement of the terminal device, or may determine the time provision requirement of the terminal device based on a time keeping capability of the terminal device.

The time keeping capability of the terminal device may be a crystal oscillator capability of the terminal device.

For example, the crystal oscillator capability of the terminal device is 0.1 ppm. The terminal device may indicate the 0.1 ppm to the application function network element, and the application function network element determines the time provision requirement of the terminal device based on the 0.1 ppm.

Optionally, the application function network element may alternatively include the time keeping capability of the terminal device in the time provision request and send the time provision request to the time sensitive communication and time synchronization function network element, and the time sensitive communication and time synchronization function network element determines the time provision requirement of the terminal device based on the time keeping capability of the terminal device.

For descriptions of the time provision requirement of the terminal device, refer to the descriptions of the time provision requirement of the terminal device in step 601. Details are not described again.

Optionally, the time provision request further includes one or more of the following: a clock synchronization type, clock synchronization error precision, and a clock source type.

The clock synchronization type may include one or more of the following: access stratum clock synchronization and gPTP clock synchronization. The clock synchronization precision may be clock synchronization error precision allowed by the terminal device. The clock source type may include one or more of the following: a GNSS clock source, a 5G communication technology grandmaster, and an NTP clock source.

Optionally, the application function network element sends the time provision request to a network exposure network element. When receiving the time provision request sent by the application function network element, the network exposure network element may authenticate the application function network element. After the authentication succeeds, the network exposure network element sends the received time provision request to the time sensitive communication and time synchronization function network element.

Optionally, if the application function network element is a third party trusted by an operator, the application function network element may skip the network exposure network element, and directly send the time provision request to the time sensitive communication and time synchronization function network element.

In a second example, the second network element is the terminal device. As shown in step 701b and step 701c in FIG. 7, the terminal device sends the time provision request to the time sensitive communication and time synchronization function network element through a mobility management network element.

Step 701b: The terminal device sends the time provision request to the mobility management network element, and correspondingly, the mobility management network element receives the time provision request from the terminal device.

The time provision request may include the identification information of the terminal device, and the time provision request may be for requesting to provide time for terminal device.

Optionally, the time provision request includes the time provision requirement of the terminal device; or the time provision request includes a time keeping capability of the terminal device.

The terminal device may directly include the time provision requirement of the terminal device in the time provision request and send the time provision request to the mobility management network element, or may include the time keeping capability of the terminal device in the time provision request and send the time provision request to the mobility management network element, and the mobility management network element determines the time provision requirement of the terminal device based on the time provision capability of the terminal device.

The time keeping capability of the terminal device may be a crystal oscillator capability of the terminal device.

For example, the crystal oscillator capability of the terminal device is 0.1 ppm. The terminal device may indicate the 0.1 ppm to the mobility management network element, and the mobility management network element determines the time provision requirement of the terminal device based on the 0.1 ppm.

Optionally, the time provision request further includes one or more of the following: a clock synchronization type, clock synchronization error precision, and a clock source type.

Optionally, the terminal device sends the time provision request to the mobility management network element by using a non-access stratum (non-access stratum, NAS) message.

Alternatively, the terminal device sends the time provision request to a network device by using a radio resource control (radio resource control, RRC) message, and the network device sends the received time provision request to the mobility management network element.

Step 701c: The mobility management network element sends the time provision request to the time sensitive communication and time synchronization function network element, and correspondingly, the time sensitive communication and time synchronization function network element receives the time provision request from the mobility management network element.

Optionally, the mobility management network element may include a time provision requirement of the terminal device in the time provision request and send the time provision request to the time sensitive communication and time synchronization function network element, or may include a time keeping capability of the terminal device in the time provision request and send the time provision request to the time sensitive communication and time synchronization network element, and the time sensitive communication and time synchronization network element determines a time provision requirement of the terminal device based on the time keeping capability of the terminal device.

For descriptions of the time provision request, refer to the descriptions of the time provision request in step 701b. Details are not described again.

Step 702: The time sensitive communication and time synchronization function network element obtains the time provision requirement of the terminal device and/or clock subscription data of the terminal device.

For the clock subscription data of the terminal device, as shown in step 702a in FIG. 7, the time sensitive communication and time synchronization function network element may request the clock subscription data of the terminal device from a network storage network element. If subscription data of the terminal device includes the clock subscription data, the network storage network element may send the clock subscription data of the terminal device to the time sensitive communication and time synchronization function network element. If subscription data of the terminal device does not include the clock subscription data, the network storage network element may notify the time sensitive communication and time synchronization function network element that the subscription data of the terminal device does not include the clock subscription data.

The clock subscription data of the terminal device may include one or more of the following: a time provision service supported by the terminal device, the time provision requirement of the terminal device, a clock synchronization type, clock synchronization error precision, a clock source type, and a charging mode of the terminal device.

For the time provision requirement of the terminal device, if the time provision request includes the time provision requirement of the terminal device, the time sensitive communication and time synchronization function network element may determine the time provision requirement of the terminal device based on the time provision request. Alternatively, if the time provision request includes the time keeping capability of the terminal device, the time sensitive communication and time synchronization function network element may determine the time provision requirement of the terminal device based on the time keeping capability. Alternatively, if the time provision request does not include the time provision requirement of the terminal device, the time sensitive communication and time synchronization function network element may also determine the time provision requirement of the terminal device based on the clock subscription data of the terminal device.

Step 703: The time sensitive communication and time synchronization function network element sends first information to a network device if the time sensitive communication and time synchronization function network element determines, based on the time provision requirement of the terminal device and/or the clock subscription data of the terminal device, to provide time for the terminal device.

After obtaining the time provision requirement of the terminal device, the time sensitive communication and time synchronization function network element may determine, based on the time provision requirement of the terminal device, to provide time for the terminal device. Alternatively, after obtaining the clock subscription data of the terminal device, the time sensitive communication and time synchronization function network element determines, based on the clock subscription data of the terminal device, to provide time for the terminal device. Alternatively, after obtaining the time provision requirement of the terminal device and the clock subscription data of the terminal device, the time sensitive communication and time synchronization function network element may determine whether the clock subscription data of the terminal device supports the time provision requirement of the terminal device. If the clock subscription data of the terminal device supports the time provision requirement of the terminal device, the time sensitive communication and time synchronization function network element may determine to provide time for the terminal device. If the clock subscription data of the terminal device does not support the time provision requirement of the terminal device, the time sensitive communication and time synchronization function network element may reject the received time provision request (in other words, not provide time for the terminal device).

For example, the time provision request includes the time provision requirement of the terminal device or the time keeping capability of the terminal device. The time sensitive communication and time synchronization function network element may determine, based on the clock subscription data of the terminal device, whether the terminal device has subscribed to a clock synchronization service in the time provision request. If the terminal device has subscribed to the clock synchronization service in the time provision request, it may be determined that the clock subscription data of the terminal device supports the time provision requirement of the terminal device. If the terminal device has not subscribed to the clock synchronization service in the time provision request, it may be determined that the clock subscription data of the terminal device does not support the time provision requirement of the terminal device.

In another example, the time provision request does not include the time provision requirement of the terminal device or the time provision capability of the terminal device. The time sensitive communication and time synchronization function network element may determine the time provision requirement of the terminal device based on the clock subscription data of the terminal device. In this case, the time sensitive communication and time synchronization function network element may determine that the clock subscription data of the terminal device supports the time provision requirement of the terminal device.

When the time sensitive communication and time synchronization function network element determines to provide time for the terminal device, the time sensitive communication and time synchronization function network element may select a proper time provision device (that is, the network device) based on the time provision requirement of the terminal device, and activate a time provision capability of the network device by using first indication information.

In addition, if the time provision request carries an error budget, the time sensitive communication and time synchronization function network element may use the error budget as a total error requirement. If the time provision request does not carry the error budget, the time sensitive communication and time synchronization function network element may use a preconfigured default value as the error budget. The time sensitive communication and time synchronization function network element may use a difference between the error budget and an error (for example, a preconfigured error) of a core network as a time provision error (that is, a first error budget) between the network device and the terminal device.

After determining the first indication information and the first error budget, the time sensitive communication and time synchronization function network element may include the first indication information, the first error budget, and the time provision requirement of the terminal device in the first information and deliver the first information to the network device.

Optionally, the time sensitive communication and time synchronization function network element uses step 703a to step 703c in FIG. 7 to send the first information to the network device through the mobility management network element.

Step 703a: The time sensitive communication and time synchronization function network element sends the first information to a policy control network element.

The time sensitive communication and time synchronization function network element may initiate update of an AM policy of the terminal device to the policy control network element based on the received time provision request, and the time sensitive communication and time synchronization function network element may send the first information to the policy control network element.

Optionally, after updating the AM policy, the policy control network element may send an AM policy update response to the time sensitive communication and time synchronization function network element.

Optionally, after receiving the AM policy update response, the time sensitive communication and time synchronization function network element sends a time provision request response to the second network element.

Step 703b: The policy control network element sends the first information to the mobility management network element.

The policy control network element may include the received first information in the AM policy and deliver the AM policy to the mobility management network element.

Step 703c: The mobility management network element sends the first information to the network device.

The mobility management network element may send the first indication information to the network device by using UE context modification (UE Context Modification) information in N2 information (N2 message), to activate the time provision capability of the network device. The mobility management network element may alternatively send the first error budget to the network device, to indicate the network device to provide time for the terminal device based on the first error budget. The mobility management network element may alternatively send the time provision requirement of the terminal device to the network device, to indicate the network device to provide time for the terminal device based on the time provision requirement of the terminal device.

Optionally, as shown in step 703d in FIG. 7, the mobility management network element may alternatively select a NAS message notification manner. To be specific, the mobility management network element may initiate a DL NAS message to send a notification about a time provision manner to the terminal device through transparent transmission of the network device, to indicate the network device and the terminal device to perform a time provision service based on the time provision requirement of the terminal device.

Optionally, as shown in step 703e in FIG. 7, the mobility management network element may alternatively select an RRC message notification manner. To be specific, the mobility management network element may send the first information to the network device; after receiving the first information, the network device sends a notification about a time provision manner to the terminal device by using an RRC message; and the mobility management network element indicates the network device and the terminal device to perform a time provision service based on the time provision requirement of the terminal device.

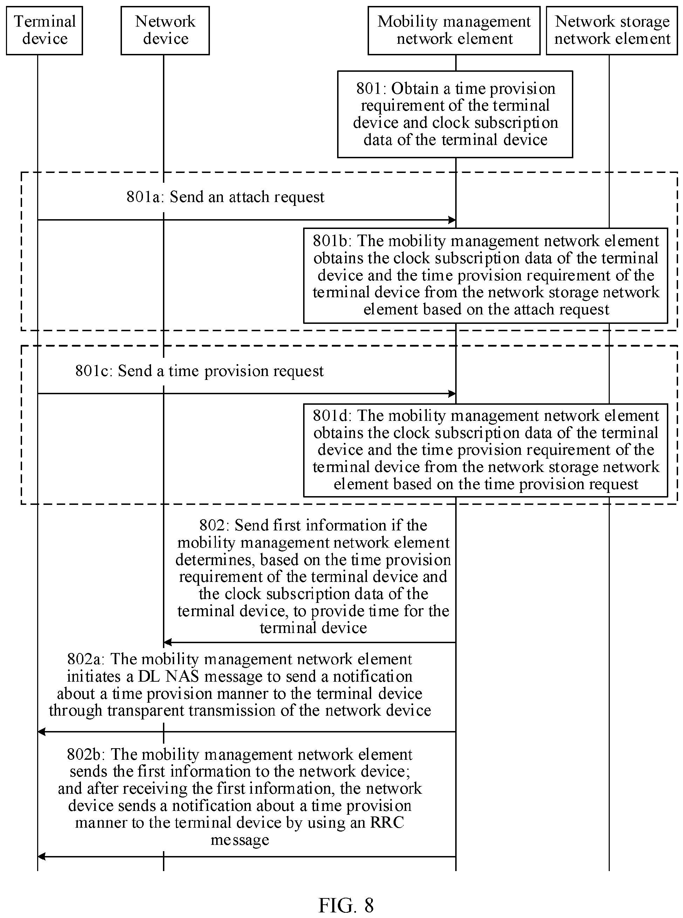

In a second possible design, for example, the first network element is the mobility management network element. The mobility management network element may send the first information to the network device by using the method shown in FIG. 8.

FIG. 8 is a flowchart of a communication method according to an embodiment of this application. As shown in FIG. 8, the method may include the following steps.

Step 801: A mobility management network element obtains a time provision requirement of a terminal device and/or clock subscription data of the terminal device.

In a first example, as shown in step 801a and step 801b in FIG. 8, when receiving an attach request of the terminal device, the mobility management network element may obtain the time provision requirement of the terminal device and/or the clock subscription data of the terminal device.

Step 801a: The terminal device sends the attach request to the mobility management network element, and correspondingly, the mobility management network element receives the attach request from the terminal device.

Step 801b: The mobility management network element obtains the clock subscription data of the terminal device and/or the time provision requirement of the terminal device from a network storage network element based on the attach request.

The mobility management network element may request the clock subscription data of the terminal device from the network storage network element. If subscription data of the terminal device includes the clock subscription data, the network storage network element may send the clock subscription data of the terminal device to the mobility management network element. If subscription data of the terminal device does not include the clock subscription data, the network storage network element may notify the mobility management network element that the subscription data of the terminal device does not include the clock subscription data.

The clock subscription data of the terminal device may include one or more of the following: the time provision requirement of the terminal device, a time provision service supported by the terminal device, a clock synchronization type, clock synchronization error precision, a clock source type, and a charging mode of the terminal device.

Optionally, the mobility management network element may further subscribe to a clock subscription data update notification from the network storage network element. The network storage network element may notify the mobility management network element when the clock subscription data of the terminal device is updated. The mobility management network element may obtain updated clock subscription data from the network storage network element based on the update notification.

In a second example, as shown in step 801c and step 801d in FIG. 8, alternatively, when receiving a time provision request of the terminal device, the mobility management network element may obtain the time provision requirement of the terminal device and/or the clock subscription data of the terminal device.

Step 801c: The terminal device sends the time provision request to the mobility management network element, and correspondingly, the mobility management network element receives the time provision request from the terminal device.

The time provision request may include the identification information of the terminal device, and the time provision request may be for requesting to provide time for terminal device.

Optionally, the time provision request includes the time provision requirement of the terminal device; or the time provision request includes a time keeping capability of the terminal device.

The terminal device may directly include the time provision requirement of the terminal device in the time provision request and send the time provision request to the mobility management network element, or may include the time keeping capability of the terminal device in the time provision request and send the time provision request to the mobility management network element, and the mobility management network element determines the time provision requirement of the terminal device based on the time provision capability of the terminal device.

The time keeping capability of the terminal device may be a crystal oscillator capability of the terminal device.

For example, the crystal oscillator capability of the terminal device is 0.1 ppm. The terminal device may indicate the 0.1 ppm to the mobility management network element, and the mobility management network element determines the time provision requirement of the terminal device based on the 0.1 ppm.

Optionally, the time provision request further includes one or more of the following: a clock synchronization type, clock synchronization error precision, and a clock source type.

Optionally, the terminal device sends the time provision request to the mobility management network element by using a NAS message.

Alternatively, the terminal device sends the time provision request to a network device by using an RRC message, and the network device sends the received time provision request to the mobility management network element.

Step 801d: The mobility management network element obtains the clock subscription data of the terminal device and/or the time provision requirement of the terminal device from a network storage network element based on the time provision request.

The mobility management network element may request the clock subscription data of the terminal device from the network storage network element. If subscription data of the terminal device includes the clock subscription data, the network storage network element may send the clock subscription data of the terminal device to the mobility management network element. If subscription data of the terminal device does not include the clock subscription data, the network storage network element may notify the mobility management network element that the subscription data of the terminal device does not include the clock subscription data.

The clock subscription data of the terminal device may include one or more of the following: the time provision requirement of the terminal device, a time provision service supported by the terminal device, a clock synchronization type, clock synchronization error precision, a clock source type, and a charging mode of the terminal device.

For the time provision requirement of the terminal device, if the time provision request includes the time provision requirement of the terminal device or the time keeping capability of the terminal device, the mobility management network element may determine the time provision requirement of the terminal device based on the time provision request. Alternatively, if the time provision request does not include the time provision requirement of the terminal device or the time keeping capability of the terminal device, the mobility management network element may determine the time provision requirement of the terminal device based on the clock subscription data of the terminal device.

Optionally, the mobility management network element may further subscribe to a clock subscription data update notification from the network storage network element. The network storage network element may notify the mobility management network element when the clock subscription data of the terminal device is updated. The mobility management network element may obtain updated clock subscription data from the network storage network element based on the update notification.

Step 802: The mobility management network element sends first information to a network device if the mobility management network element determines, based on the time provision requirement of the terminal device and/or the clock subscription data of the terminal device, to provide time for the terminal device.

After obtaining the time provision requirement of the terminal device, the mobility management network element may determine, based on the time provision requirement of the terminal device, to provide time for the terminal device. Alternatively, after obtaining the clock subscription data of the terminal device, the mobility management network element determines, based on the clock subscription data of the terminal device, to provide time for the terminal device. Alternatively, after obtaining the time provision requirement of the terminal device and the clock subscription data of the terminal device, the mobility management network element may determine whether the clock subscription data of the terminal device supports the time provision requirement of the terminal device. If the clock subscription data of the terminal device supports the time provision requirement of the terminal device, the mobility management network element may determine to provide time for the terminal device. If the clock subscription data of the terminal device does not support the time provision requirement of the terminal device, the mobility management network element may reject the received time provision request (in other words, not provide time for the terminal device).

For example, the time provision request includes the time provision requirement of the terminal device or the time keeping capability of the terminal device. The mobility management network element may determine, based on the clock subscription data of the terminal device, whether the terminal device has subscribed to a clock synchronization service in the time provision request. If the terminal device has subscribed to the clock synchronization service in the time provision request, it may be determined that the clock subscription data of the terminal device supports the time provision requirement of the terminal device. If the terminal device has not subscribed to the clock synchronization service in the time provision request, it may be determined that the clock subscription data of the terminal device does not support the time provision requirement of the terminal device.

In another example, the time provision request does not include the time provision requirement of the terminal device or the time keeping capability of the terminal device. The mobility management network element may determine the time provision requirement of the terminal device based on the clock subscription data of the terminal device. In this case, the mobility management network element may determine that the clock subscription data of the terminal device supports the time provision requirement of the terminal device.

When the mobility management network element determines to provide time for the terminal device, the mobility management network element may select a proper time provision device (that is, the network device) based on the time provision requirement of the terminal device, and activate a time provision capability of the network device by using first indication information.

In addition, if the time provision request carries an error budget, the mobility management network element may use the error budget as a total error requirement. If the time provision request does not carry the error budget, the mobility management network element may use a preconfigured default value as the error budget. The mobility management network element may use a difference between the error budget and an error (for example, a preconfigured error) of a core network as a time provision error (that is, a first error budget) between the network device and the terminal device.

After determining the first indication information and the first error budget, the mobility management network element may include the first indication information, the first error budget, and the time provision requirement of the terminal device in the first information and deliver the first information to the network device.

The mobility management network element may send the first indication information to the network device by using UE context modification (UE Context Modification) information in N2 information (N2 message), to activate the time provision capability of the network device. The mobility management network element may alternatively send the first error budget to the network device, to indicate the network device to provide time for the terminal device based on the first error budget. The mobility management network element may alternatively send the time provision requirement of the terminal device to the network device, to indicate the network device to provide time for the terminal device based on the time provision requirement of the terminal device.

Optionally, as shown in step 802a in FIG. 8, the mobility management network element may alternatively select a NAS message notification manner. To be specific, the mobility management network element may initiate a DL NAS message to send a notification about a time provision manner to the terminal device through transparent transmission of the network device, to indicate the network device and the terminal device to perform a time provision service based on the time provision requirement of the terminal device.

Optionally, as shown in step 802b in FIG. 8, the mobility management network element may alternatively select an RRC message notification manner. To be specific, the mobility management network element may send the first information to the network device; after receiving the first information, the network device sends a notification about a time provision manner to the terminal device by using an RRC message; and the mobility management network element indicates the network device and the terminal device to perform a time provision service based on the time provision requirement of the terminal device.

Based on the foregoing descriptions of sending the first information by the first network element to the network device in FIG. 7 and FIG. 8, the network device may activate the time provision capability based on the first indication information in the first information, and then provide time for the terminal device based on the following step 602 and the first information.

Optionally, the first information further includes one or more of the following: a clock synchronization type, clock synchronization error precision, and a clock source type.

Step 602: The network device sends time provision information to the terminal device based on the first error budget and the time provision requirement of the terminal device.

The time provision requirement of the terminal device may include one or more of the following: a periodic time provision requirement and a time provision service coverage area requirement.

In a first possible design, when the time provision requirement of the terminal device includes the periodic time provision requirement, the network device may periodically send the time provision information to the terminal device.

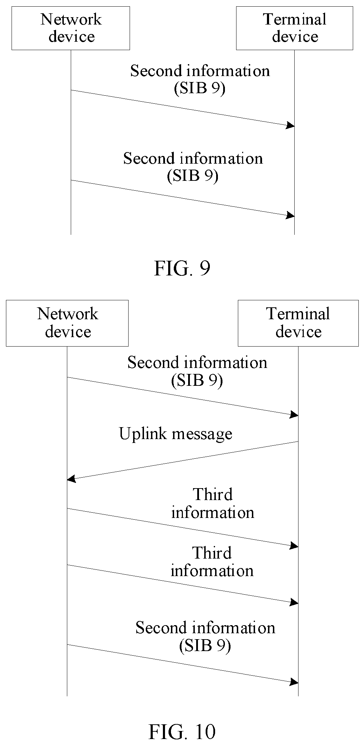

In a first example, as shown in FIG. 9, the network device may periodically broadcast second information, and the terminal device performs clock synchronization based on the second information.

The second information may include the time provision information, and the time provision information may be used by the terminal device to perform clock synchronization.

Optionally, the second information is a SIB 9, and a broadcast periodicity associated with the SIB 9 is 320 ms.

In a second example, the network device may periodically broadcast second information. If a periodicity associated with the periodic time provision requirement is less than a broadcast periodicity associated with the second information, as shown in FIG. 10, the network device may periodically send third information to the terminal device; or the network device periodically broadcasts third information, and the terminal device receives the third information broadcast by the network device.

The second information includes the time provision information; or the third information may include the time provision information, and a sending periodicity of the third information is less than the broadcast periodicity associated with the second information.

Optionally, the second information is a SIB 9, and a broadcast periodicity associated with the SIB 9 is 320 ms.

Optionally, the sending periodicity of the third information is the periodicity associated with the periodic time provision requirement.

The network device may adjust frequency of sending the time provision information to the terminal device. For example, the periodicity associated with the periodic time provision requirement is 160 ms. The network device may send the third information to the terminal device between two times of sending the second information, or broadcast the third information between two times of sending the second information.

For example, the network device may send the third information to the terminal device in a propagation delay compensation (propagation delay compensation, PDC) manner based on the periodicity associated with the periodic time provision requirement.

The PDC manner may include one or more of the following manners: an RTT manner and a TA-based manner.

Based on the second example, for a terminal device having a poor crystal oscillator, frequency of performing clock synchronization by the terminal device can be increased by increasing the frequency of sending the time provision information, thereby improving clock synchronization accuracy and reducing a clock error.

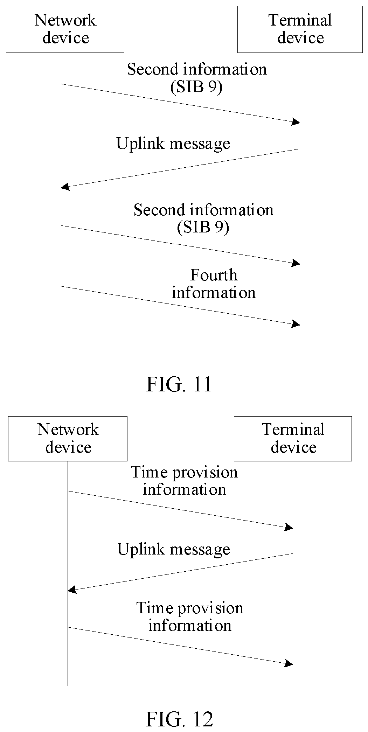

In a third example, the network device may periodically broadcast second information. If a periodicity associated with the periodic time provision requirement is greater than a broadcast periodicity associated with the second information, as shown in FIG. 11, the network device may periodically send fourth information to the terminal device; or the network device periodically broadcasts fourth information, and the terminal device receives the fourth information broadcast by the network device.

The second information may include the time provision information, or the fourth information may include the time provision information, and a sending periodicity of the fourth information is greater than the broadcast periodicity associated with the second information.

Optionally, the second information is a SIB 9, and a broadcast periodicity associated with the SIB 9 is 320 ms.

Optionally, the sending periodicity of the fourth information is the periodicity associated with the periodic time provision requirement.

The network device may adjust frequency of sending the time provision information to the terminal device. For example, the periodicity associated with the periodic time provision requirement is 640 ms. The network device may send the fourth information to the terminal device after sending the second information twice, or broadcast the fourth information after sending the second information twice.

For example, the network device may send the fourth information to the terminal device in a PDC manner based on the periodicity associated with the periodic time provision requirement.

The PDC manner may include one or more of the following manners: an RTT manner and a TA-based manner.

Based on the third example, for a terminal device having a good crystal oscillator, frequency of performing clock synchronization by the terminal device can be reduced by reducing the frequency of sending the time provision information, thereby reducing power consumption caused by the clock synchronization performed by the terminal device, and improving an energy saving effect.

In a fourth example, as shown in FIG. 12, the network device periodically sends the time provision information to the terminal device based on a periodicity associated with the periodic time provision requirement.

The network device may alternatively directly periodically send the time provision information to the terminal device based on the periodicity associated with the periodic time provision requirement, to meet the periodic time provision requirement of the terminal device, and thereby improving reliability of clock synchronization performed by the terminal device.

For example, the periodicity associated with the periodic time provision requirement is 200 ms, and the network device may send the time provision information to the terminal device once every 200 ms.

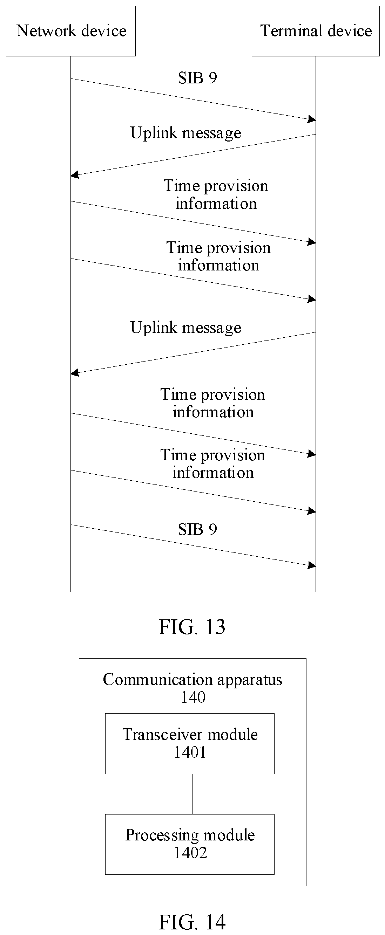

In a fifth example, as shown in FIG. 13, the network device sends the time provision information to the terminal device in a PDC manner based on a periodicity associated with the periodic time provision requirement.

The PDC manner may include one or more of the following manners: an RTT manner and a TA-based manner.

In a second possible design, when the time provision requirement of the terminal device includes a time provision service coverage area requirement, the network device may determine, based on the time provision service coverage area requirement and location information of the terminal device, whether the terminal device is in a first coverage area; and if the terminal device is in the first coverage area, the network device sends the time provision information to the terminal device.

The time provision service coverage area requirement may indicate the first coverage area.

The network device may send the time provision information to the terminal device when the terminal device is in the first coverage area, or may not send the time provision information to the terminal device when the terminal device is outside the first coverage area.

Optionally, when the terminal device is handed over from the network device to a target network device in a moving process, the network device may send the time provision requirement of the terminal device to the target network device, and the target network device provides time for the terminal device based on the time provision requirement of the terminal device.

Optionally, the network device may further send second indication information to the terminal device, where the second indication information may indicate a time provision manner in which the network device sends the time provision information to the terminal device. The terminal device may determine, based on the second indication information, the time provision manner in which the network device sends the time provision information, and receive, based on the time provision manner, the time provision information sent by the network device, to complete clock synchronization.

The time provision manner may be any time provision manner shown in FIG. 9 to FIG. 13. This is not limited.

Optionally, the second indication information may further indicate periodicity information (in other words, sending frequency information of the time provision information) of sending the time provision information by the network device to the terminal device.

Optionally, the time provision requirement of the terminal device may further include a time provision start/end requirement of the terminal device on the time provision service. The network device starts to provide time for the terminal device or stops performing time provision for the terminal device based on the time provision start/end requirement that is of the terminal device on the time provision service and that is sent by the first network element.

Based on the method shown in FIG. 6 to FIG. 13, in a process in which the network device provides time for the terminal device, the network device may not only receive, from the first network element, the first indication information and the first error budget that are for activating the time provision capability of the network device, but also receive the time provision requirement of the terminal device from the first network element. The time provision is performed for the terminal device based on the time provision requirement of the terminal device, to meet the time provision requirement of the terminal device, thereby improving reliability of clock synchronization performed by the terminal device.

In addition, in the process in which the network device provides time for the terminal device, embodiments of this application provide a plurality of implementable time provision manners. As shown in FIG. 7, the application function network element may request the time sensitive communication and time synchronization function network element to provide time for the terminal device, or the terminal device may request the time sensitive communication and time synchronization function network element to provide time for the terminal device. The time sensitive communication and time synchronization function network element may indicate, based on the time provision requirement of the terminal device, the network device to provide time for terminal devices, to meet the time provision requirement of the terminal device, thereby improving the reliability of clock synchronization performed by the terminal device. As shown in FIG. 8, alternatively, the mobility management network element may indicate, based on the attach request of the terminal device (in other words, in an application-free scenario), the network device to provide time for the terminal device, or the mobility management network element indicates, based on the time provision request of the terminal device, the network device to provide time for the terminal devices, to meet the time provision requirement of the terminal device, thereby improving the reliability of clock synchronization performed by the terminal device.

It should be noted that the methods provided in embodiments of this application may be implemented separately, or may be implemented in combination. This is not limited.

It may be understood that an execution body may perform some or all of the steps in embodiments of this application. The steps or operations are merely examples. Other operations or variations of various operations may be further performed in embodiments of this application. In addition, the steps may be performed in a sequence different from a sequence presented in embodiments of this application, and not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation exceeds the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, module division is an example, and is merely logical function division. In actual implementation, another division manner may be used.

When each functional module is obtained through division based on each corresponding function, FIG. 14 shows a communication apparatus 140. The communication apparatus 140 may perform actions performed by the network device in FIG. 6 to FIG. 13, or perform actions performed by the time sensitive communication and time synchronization function network element in FIG. 6 to FIG. 13, or perform actions performed by the mobility management network element in FIG. 6 to FIG. 13.

The communication apparatus 140 may include a transceiver module 1401 and a processing module 1402. For example, the communication apparatus 140 may be a communication device, or may be a chip used in the communication device, or another combined device or component that has a function of the communication apparatus. When the communication apparatus 140 is the communication device, the transceiver module 1401 may be a transceiver. The transceiver may include an antenna, a radio frequency circuit, and the like. The processing module 1402 may be a processor (or a processing circuit), for example, a baseband processor. The baseband processor may include one or more CPUs. When the communication apparatus 140 is the component that has the function of the communication apparatus, the transceiver module 1401 may be a radio frequency unit; and the processing module 1402 may be a processor (or a processing circuit), for example, a baseband processor. When the communication apparatus 140 is a chip system, the transceiver module 1401 may be an input/output interface of a chip (for example, a baseband chip), and the processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (or referred to as a processing circuit).

For example, the transceiver module 1401 may be configured to perform all receiving and sending operations performed by the communication apparatus in the embodiments shown in FIG. 5 to FIG. 10, and/or configured to support another process of the technology described in this specification. The processing module 1402 may be configured to perform all operations, except the receiving and sending operations, performed by the communication apparatus in the embodiments shown in FIG. 5 to FIG. 10, and/or configured to support another process of the technology described in this specification.

In another implementation, the transceiver module 1401 in FIG. 14 may be replaced with a transceiver, where a function of the transceiver module 1401 may be integrated into the transceiver; and the processing module 1402 may be replaced with a processor, where a function of the processing module 1402 may be integrated into the processor. Further, the communication apparatus 140 shown in FIG. 14 may further include a memory.

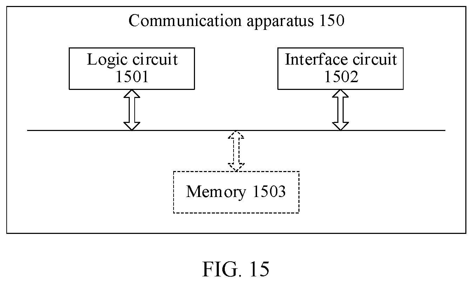

Alternatively, when the processing module 1402 is replaced with the processor, and the transceiver module 1401 is replaced with the transceiver, the communication apparatus 140 in this embodiment of this application may be a communication apparatus 150 shown in FIG. 15. The processor may be a logic circuit 1501, and the transceiver may be an interface circuit 1502. Further, the communication apparatus 150 shown in FIG. 15 may further include a memory 1503.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit in the terminal in any one of the foregoing embodiments (including a data transmit end and/or a data receive end), for example, a hard disk drive or memory of the terminal. The computer-readable storage medium may alternatively be an external storage device of the foregoing terminal, for example, a plug-in hard disk drive, a smart media card (smart media card, SMC), a secure digital (secure digital, SD) card, or a flash card (flash card) that is configured on the terminal. Further, the computer-readable storage medium may alternatively include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" refers to two or more. "At least two (items) "means two, three, or more. "and/or" is for describing an association relationship between associated objects and represents that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, the word "example" or "for example" is for representing giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Based on the foregoing descriptions of the implementations, a person skilled in the art may clearly understand that for the purpose of convenient and brief description, division of the foregoing functional modules is used as an example for illustration. In actual application, the foregoing functions can be allocated to different functional modules and implemented based on needs. To be specific, an inner structure of an apparatus is divided into different functional modules to implement all or some of the functions described above.

In the plurality of embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a readable storage medium. Based on such understanding, the technical solutions in embodiments of this application essentially or all or some of the technical solutions may be implemented in the form of a software product. The software product is stored in a storage medium and includes a plurality of instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

## Claims

1. A communication method, comprising:
receiving, by a network device, first information from a first network element, wherein the first network element is a mobility management network element or a time sensitive communication and time synchronization function network element, the first information comprises first indication information, a first error budget, and a time provision requirement of a terminal device, the first indication information is for activating a time provision capability of the network device, and the first error budget indicates a time provision error range between the network device and the terminal device; and
sending, by the network device, time provision information to the terminal device based on the first error budget and the time provision requirement of the terminal device.

2. The method according to claim 1, wherein
the time provision requirement of the terminal device comprises one or more of the following: a periodic time provision requirement and a time provision service coverage area requirement.

3. The method according to claim 2, wherein when the time provision requirement of the terminal device comprises the periodic time provision requirement, the sending, by the network device, time provision information to the terminal device comprises:
periodically broadcasting, by the network device, second information, wherein the second information comprises the time provision information; and
periodically sending, by the network device, third information to the terminal device if a periodicity associated with the periodic time provision requirement is less than a broadcast periodicity associated with the second information, wherein the third information comprises the time provision information, and a sending periodicity of the third information is less than the broadcast periodicity; or
periodically sending, by the network device, fourth information to the terminal device if a periodicity associated with the periodic time provision requirement is greater than a broadcast periodicity associated with the second information, wherein the fourth information comprises the time provision information, and a sending periodicity of the fourth information is greater than the broadcast periodicity.

4. The method according to claim 2, wherein when the time provision requirement of the terminal device comprises the periodic time provision requirement, the sending, by the network device, time provision information to the terminal device comprises:
periodically broadcasting, by the network device, second information, wherein the second information comprises the time provision information; and
periodically broadcasting, by the network device, third information if a periodicity associated with the periodic time provision requirement is less than a broadcast periodicity associated with the second information, wherein the third information comprises the time provision information, and a sending periodicity of the third information is less than the broadcast periodicity associated with the second information; or
periodically broadcasting, by the network device, fourth information if a periodicity associated with the periodic time provision requirement is greater than a broadcast periodicity associated with the second information, wherein the fourth information comprises the time provision information, and a sending periodicity of the fourth information is greater than the broadcast periodicity associated with the second information.

5. The method according to claim 2, wherein when the time provision requirement of the terminal device comprises the periodic time provision requirement, the sending, by the network device, time provision information to the terminal device comprises:
periodically sending, by the network device, the time provision information to the terminal device based on a periodicity associated with the periodic time provision requirement.

6. The method according to claim 2, wherein when the time provision requirement of the terminal device comprises the periodic time provision requirement, the sending, by the network device, time provision information to the terminal device comprises:
sending, by the network device, the time provision information to the terminal device in a propagation delay compensation PDC manner based on a periodicity associated with the periodic time provision requirement, wherein the PDC manner comprises one or more of the following: a round trip time RTT manner and a timing advance TA-based manner.

7. The method according to claim 2, wherein when the time provision requirement of the terminal device comprises the time provision service coverage area requirement, the sending, by the network device, time provision information to the terminal device comprises:
determining, by the network device based on the time provision service coverage area requirement and location information of the terminal device, whether the terminal device is in a first coverage area, wherein the time provision service coverage area requirement indicates the first coverage area; and
sending, by the network device, the time provision information to the terminal device if the terminal device is in the first coverage area.

8. The method according to any one of claims 1 to 7, wherein the method further comprises:
when the terminal device is handed over from the network device to a target network device, sending, by the network device, the time provision requirement of the terminal device to the target network device.

9. The method according to any one of claims 1 to 8, wherein
the first information further comprises one or more of the following: a clock synchronization type, clock synchronization error precision, and a clock source type.

10. The method according to any one of claims 1 to 9, wherein the method further comprises:
sending, by the network device, second indication information to the terminal device, wherein the second indication information indicates a time provision manner in which the network device sends the time provision information to the terminal device.

11. The method according to any one of claims 1 to 10, wherein if the first network element is the time sensitive communication and time synchronization function network element, the receiving, by a network device, first information from a first network element, comprises:
receiving, by the network device, the first information from the time sensitive communication and time synchronization function network element through a mobility management network element.

12. The method according to any one of claims 1 to 11, wherein before the receiving, by a network device, first information from a first network element, the method further comprises:
receiving, by the network device, a time provision request from the terminal device, wherein the time provision request comprises identification information of the terminal device, and the time provision request is for requesting to provide time for the terminal device; and
sending, by the network device, the time provision request to the first network element.

13. The method according to claim 12, wherein
the time provision request comprises the time provision requirement of the terminal device; or
the time provision request comprises a time keeping capability of the terminal device, wherein the time keeping capability is for determining the time provision requirement of the terminal device.

14. A communication method, comprising:
receiving, by a time sensitive communication and time synchronization function network element, a time provision request from a second network element, wherein the second network element is an application function network element or a terminal device, the time provision request comprises identification information of the terminal device, and the time provision request is for requesting to provide time for the terminal device;
obtaining, by the time sensitive communication and time synchronization function network element, a time provision requirement of the terminal device and/or clock subscription data of the terminal device; and
sending, by the time sensitive communication and time synchronization function network element, first information to a network device if the time sensitive communication and time synchronization function network element determines, based on the time provision requirement of the terminal device and/or the clock subscription data of the terminal device, to provide time for the terminal device, wherein
the first information comprises first indication information, a first error budget, and the time provision requirement of the terminal device, the first indication information is for activating a time provision capability of the network device, and the first error budget indicates a time provision error range between the network device and the terminal device.

15. The method according to claim 14, wherein
the time provision requirement of the terminal device comprises one or more of the following: a periodic time provision requirement and a time provision service coverage area requirement.

16. The method according to claim 14 or 15, wherein the obtaining, by the time sensitive communication and time synchronization function network element, a time provision requirement of the terminal device comprises:
the time provision request comprises the time provision requirement of the terminal device; or
the time provision request comprises a time keeping capability of the terminal device, and determining, by the time sensitive communication and time synchronization function network element, the time provision requirement of the terminal device based on the time keeping capability; or
receiving, by the time sensitive communication and time synchronization function network element, the clock subscription data of the terminal device from a network storage network element, wherein the clock subscription data of the terminal device comprises the time provision requirement of the terminal device.

17. The method according to any one of claims 14 to 16, wherein that the time sensitive communication and time synchronization function network element determines, based on the time provision requirement of the terminal device and/or the clock subscription data of the terminal device, to provide time for the terminal device comprises:
if the clock subscription data of the terminal device supports the time provision requirement of the terminal device, determining, by the time sensitive communication and time synchronization function network element, to provide time for the terminal device.

18. The method according to any one of claims 14 to 17, wherein
the time provision request further comprises one or more of the following: a clock synchronization type, clock synchronization error precision, and a clock source type; and/or
the first information further comprises one or more of the following: a clock synchronization type, clock synchronization error precision, and a clock source type.

19. The method according to any one of claims 14 to 18, wherein the sending, by the time sensitive communication and time synchronization function network element, first information to a network device comprises:
sending, by the time sensitive communication and time synchronization function network element, the first information to the network device through a mobility management network element.

20. A communication method, comprising:
obtaining, by a mobility management network element, a time provision requirement of a terminal device and/or clock subscription data of the terminal device; and
sending, by the mobility management network element, first information to a network device if the mobility management network element determines, based on the time provision requirement of the terminal device and/or the clock subscription data of the terminal device, to provide time for the terminal device, wherein
the first information comprises first indication information, a first error budget, and the time provision requirement of the terminal device, the first indication information is for activating a time provision capability of the network device, and the first error budget indicates a time provision error range between the network device and the terminal device.

21. The method according to claim 20, wherein
the time provision requirement of the terminal device comprises one or more of the following: a periodic time provision requirement and a time provision service coverage area requirement.

22. The method according to claim 20 or 21, wherein the obtaining, by a mobility management network element, a time provision requirement of a terminal device comprises:
receiving, by the mobility management network element, the clock subscription data of the terminal device from a network storage network element, wherein the clock subscription data of the terminal device comprises the time provision requirement of the terminal device; or
receiving, by the mobility management network element, a time provision request from the terminal device, wherein the time provision request comprises the time provision requirement of the terminal device; or
receiving, by the mobility management network element, a time provision request from the terminal device, wherein the time provision request comprises a time keeping capability of the terminal device; and determining, by the mobility management network element, the time provision requirement of the terminal device based on the time keeping capability.

23. The method according to any one of claims 20 to 22, wherein that the mobility management network element determines, based on the time provision requirement of the terminal device and/or the clock subscription data of the terminal device, to provide time for the terminal device comprises:
if the clock subscription data of the terminal device supports the time provision requirement of the terminal device, determining, by the mobility management network element, to provide time for the terminal device.

24. The method according to any one of claims 20 to 23, wherein
the clock subscription data further comprises one or more of the following: a clock synchronization type, clock synchronization error precision, and a clock source type; and/or
the first information further comprises one or more of the following: a clock synchronization type, clock synchronization error precision, and a clock source type.

25. A communication apparatus, wherein the communication apparatus comprises a processor, and the processor is configured to enable, by running a computer program or instructions or through a logic circuit, the communication apparatus to perform the communication method according to any one of claims 1 to 13, the communication method according to any one of claims 14 to 19, or the communication method according to any one of claims 20 to 24.

26. A communication apparatus, wherein the communication apparatus comprises an input/output interface and a logic circuit, the input/output interface is configured to input and/or output information, and the logic circuit is configured to: perform the communication method according to any one of claims 1 to 13, the communication method according to any one of claims 14 to 19, or the communication method according to any one of claims 20 to 24, and perform processing based on the information and/or generate the information.

27. A computer-readable storage medium, wherein the computer-readable storage medium stores computer instructions or a program, and when the computer instructions or the program is run on a computer, the computer is enabled to perform the communication method according to any one of claims 1 to 13, the communication method according to any one of claims 14 to 19, or the communication method according to any one of claims 20 to 24.

28. A computer program product, wherein the computer program product comprises computer instructions; and when a part or all of the computer instructions are run on a computer, the computer is enabled to perform the communication method according to any one of claims 1 to 13, the communication method according to any one of claims 14 to 19, or the communication method according to any one of claims 20 to 24.
